# NEW EUROPEAN PATENT SPECIFICATION

(11) **EP 0 705 852 B2**
(45) Date of publication and mention of the opposition decision: **22.09.2010**
(45) Mention of the grant of the patent: 16.12.1998
(21) Application number: 95650033.4
(22) Date of filing: 15.09.1995
(51) Int. Cl.: C08F 220/04, C08F 220/30

(54) **High performance alkali - swellable rheological additives for aqueous systems**
Hochleistungs alkali-quellbare rheologische Additive für wässrige Systeme
Additifs rhéologiques gonflables dans l'alkali à haute performance pour systèmes aqueux

(30) Priority: 29.09.1994 US 315000
(43) Date of publication of application: 10.04.1996
(73) Proprietor: RHEOX INTERNATIONAL, INC., Hightstown, New Jersey 08520 (US)
(72) Inventor: Doolan, Joseph G., E. Windsor, New Jersey 08520 (US); Nae, Hemi, Princetown Jct., New Jersey 08550 (US); Eckel, Margaret A., Apt. 8L, Bordentown, New Jersey 08505 (US)
(74) Representative: Duffy, Assumpta Dympna

(56) References cited:
- EP-A- 0 350 414
- WO-A-90/07529
- FR-A- 2 693 203
- US-A- 4 138 381

## Description

### Background of the Invention

This invention relates to rheological additives for aqueous systems. Rheological additives are chemical materials which, when added in relatively small amounts to a system, change the system's rheological properties - its properties of viscosity, leveling, settling, flow and the like. Such additives, often referred to as thickeners, are also sometimes designated as viscosity modifiers, gellants, thixotropic additives, suspending agents, rheology modifiers and viscosifiers.

Aqueous compositions where such products have proved useful include paints, particularly latex and other water-miscible paints, and other coating compositions. Aqueous inks also employ such additives, as do a wide variety of other aqueous systems. In these aqueous compositions, the operation of the rheological additive changes and improves their rheological properties, for example, to obtain a proper viscosity in order to maintain the dispersion, suspension and emulsification of pigments, binders and other solids therein. The application properties, such as flow, levelling and sag, of such systems and their shelf lives depend almost exclusively upon the rheological additive incorporated into the system. It is generally understood that rheological modifiers are one of the most essential paint and coating components.

Among well-known rheological additives are clays and organic and polymeric thickeners. These rheological additives have been described, for example, by Van der Watt and Goodman in Clay and Clay Materials, Volume 9, page 568 (1960) and McCormick, Gok and Schulz, in Encyclopedia or Polymer Science and Engineering, Volume 17, page 730 (1989).

Clay minerals are a group of minerals composed essentially of hydrated aluminum silicates. Among common clays are montmorillonite, kaolin, illite, saponite, bentonite, hectorite, beidellite, stevensite, attapulgite and sepiolite. These minerals are described in Applied Clay Mineralogy, R.E. Grim, McGraw Hill, NY (1962). Important types of clay minerals used for rheological additives in aqueous systems are bentonite and hectorite, which are obtained from various deposits. Hectorite deposits typically contain about 50% hectorite by weight, the other components being mainly calcite and dolomite, and sometimes feldspar. Rheox, the assignee herein, maintains a mine in Hector, California, and provides hectorite to the United States market for use as an aqueous thickener. These clays are usually beneficiated by removing the impurities, for example, by preparing a water slurry, centrifugation, separation of the purified clay, and drying of the clay by various methods, such as spray drying.

Among the organic and polymeric rheological additives for aqueous systems are guar gum, tragacanth gum, pectin, xanthan and alginate, which are often called natural organic thickeners; hydroxyethylcellulose and methyl cellulose, which are modified cellulosics derived from wood; and synthetic polymers or copolymers.

Commercial thickeners for latex paints available today are mostly cellulosic-based or polymeric thickeners which thicken the aqueous vehicle or carrier of the paint. Such thickeners are relatively expensive and, at the same time, have often failed to provide the necessary rheology to achieve better viscosity control, spatter resistance and flow properties, as demanded by modern paint and coatings manufacturers.

Latex paint compositions are used extensively for both utility reasons and as decoration. It is highly desired that such systems be flowable during their application, but that they not sag after they have been applied. It is further desired that, while being applied, the coatings remain on the substrate and not spatter into the application area. It is still further desired that such latex systems be stable at a variety of both low and elevated temperatures (and for a sufficient period of time), so that their properties do not change upon storage, including storage at non-ambient temperatures.

The rheological additives used with such systems may be added to the aqueous latex system either during the grinding stage or after the pigment has been dispersed, i.e., as a post-additive. Polysaccarides, such as hydroxyethyl cellulose, have dominated the latex paint thickener market almost since the introduction of latex paint on a commercial scale. Hydroxyethyl cellulose ("HEC") is a common nonionic water soluble material that thickens and can stabilize water-based systems.

However, HEC suffers from several disadvantages not least of which is high cost. In some formulations, HEC is responsible for poor spatter resistance. Hydroxyethyl cellulose thickeners are also subject to bacterial and enzymatic-induced degradation resulting in loss of viscosity and other flow properties, and therefore require the incorporation of anti-biodegradation preservatives when used in paint and coatings. In addition, because these types of thickeners swell rapidly in water to form lumps which are not readily dispersed, the proper addition of HEC thickeners requires metered and slow addition, resulting in long mixing and dilution times. The resulting delays increase the processing cost in the coating preparation process.

For these reasons and others, a search has long continued for a polymeric thickener to replace HEC and similar cellulosics which (1) can be employed as a post-additive directly to aqueous compositions, particularly latex paint and ink compositions, (2) is not biodegradable and is without toxic by-products, (3) yields a lower overall manufacturing cost for equivalent performance with respect to the rheological properties of latex compositions into which it is mixed, (4) provides better viscosity-control properties, and (5) improves storage stability and pigment suspension.

In recent years this search has led to various synthetic polymeric thickeners prepared as the reaction products of various chemicals. One polyurethane-based type of such polymers is shown in Rheox U.S. Patent No. 5,023,309. A second type of polymer is manufactured by copolymerizing together two or more monomers, one or more of which is carboxyl-containing. These polymers may have an essentially linear structure, a branched structure or a three dimensional network structure caused by cross-linking. One of the first such polymers is described in Rheox U.S. Patent No. 4,226,754, issued in 1980, which in a preferred embodiment discloses a polymer made by the reaction of (a) an ester of methacrylic acid, (b) methacrylic acid and (c) a vinyl ester of a saturated aliphatic carboxylic acid. This type of thickener has often been referred to as an alkali-swellable or alkali soluble latex copolymeric thickener, as it contains carboxylic acid groups in sufficient quantity to render the polymer soluble in water following neutralisation with a water-soluble base.

The basic carboxyl-containing polymeric chemistry has been extended by the introduction of hydrophobic entities into the polymeric backbone. U.S. Patent No. 4,384,096 describes an improved water soluble thickener which discloses a polymer which is the reaction product of a C₃ - C₈ α,β-ethylenically unsaturated carboxylic acid monomer, a nonionic vinyl monomer, and from 1% to 30% of a defined vinyl surfactant ester. One of the two vinyl surfactant esters shown in the patent is an alkylphenoxypoly (ethyleneoxy) ethyl acrylate, terminated on one end with a C₈ - C₁₆ alkyl phenyl group. U.S. Patent No. 4,138,381 shows a reaction product of an unsaturated carboxylic acid of 3 to 6 carbon atoms, alkyl acrylate or alkyl methacrylate, and an ester containing an alkyl phenyl group, where the alkyl group has from 8 to 20 carbon atoms.

European Patent No. 13,836 describes an acrylic emulsion copolymer useful as a thickener, made by the emulsion copolymerization of four monomers, which would include a) acrylic or methacrylic acid, b) alkyl acrylate or methacrylate, c) an ethoxylated ester of acrylic or methacrylic acid having a hydrophobic group and d) an optional polyethylenically unsaturated monomer. A 1987 article in volume 57 of the Proceedings of the ACS Division of Polymeric Materials on pages 476 to 481 describes adding by solvation an alkyl polyethylenoxy ether surfactant to an associative polymer with a polyacrylamide backbone.

A similar variant of a polymeric thickener for aqueous paint and drilling muds is described in U.S. Patent No. 4,421,902. This patent discloses a co-polymer which can be the reaction product of monomers including methacrylic acid, ethyl acrylate, optionally a defined copolymerizable ethylenically unsaturated monomer, and a small weight percent of a polyethylenically unsaturated monomer. This patent further describes how a wide range of surfactants can provide enhancement of thickening when added to an aqueous system containing the copolymer of the invention, when the emulsion copolymer is neutralized.

More recently, U.S. Patent No. 4,668,410 shows a water-soluble copolymer for systems free of mineral oil, used to adjust the viscosity of the system. This polymer is the reaction product of six components, including methacrylic acid, methacrylic acid esters or acrylic acid esters of certain alcqhols, vinyl esters and a surface-active unsaturated ester. The surface-active ester is terminated at one end with an aliphatic (C₂-C₃₀) -radical, which can be linear or branched. a mono-, di- or tri- alkyl phenyl radical with alkyl groups of 4 to 12 carbon atoms, or a block-copolymeric radical of a specific type. On partial or complete neutralization, the polymer becomes water-soluble or colloidally dispersible in water, and can be used as a thickener. Reissue Patent No. 33,008 granted in 1989 shows similar copolymers using as a reactant a surfactant, which is made by condensing a polyhydric alcohol with a monoethylenically unsaturated monoisocyanate.

Many of the above patents describe commercial rheological additives which have entered the aqueous thickener marketplace. For example, Rheox, Inc., assignee of the instant invention, sells a product designated "Rheolate 1", a rheological additive which incorporates the invention of U.S. Patent No. 4,226,754. This and similar products, while effective, have not completely satisfied past needs. Most importantly, they are not expected to satisfy present and future needs for effective latex and aqueous thickeners. For these reasons, a search for a superior polymeric thickener has continued. The present invention was developed in response to this search, and the long-felt need it represent for a product which will impart the required sag resistance, efficiency and viscosity to aqueous systems.

### OBJECT AND SUMMARY OF THE INVENTION

### Object of the Invention:

It is a specific object of the claimed invention to provide a highly effective polymeric rheological additive for aqueous compositions, particularly aqueous paints and coatings. Such compositions specifically include latex systems, paints. coatings, adhesives and drilling muds.

It is a further object of the invention to provide an additive that can be readily dispersed into the system to be thickened, which is easily handled, and which can readily be incorporated.

It is a further object of the invention to provide an additive which can easily be made using available chemical materials and current process technology, including known suspension, emulsion and solution polymerization techniques, on a continuous, semi-continuous or one-time batch basis.

Other objects, as well as advantages, of the invention will become clear from the following summary and description, or will become apparent to the skilled artisan, as obvious variations of the instant invention.

### Summary of the Invention

According to the present invention there is provided a composition of matter useful as a rheological additive for aqueous compositions comprising the reaction product of
(a) 15 to 80 percent by weight of one or more C₃-C₈ α,β-ethylenically unsaturated carboxylic acid monomers;
(b) at least 15 percent by weight of one or more copolymerizable non-ionic vinyl C₂-C₁₂ α,β-ethylenically unsaturated monomers; and
(c) 0.5 to 25 percent by weight of one or more hydrophobic surfactant monomers selected among non-ionic polyalkoxylated vinyl monomers as defined hereinafter containing an aralkyl substituted phenol hydrophobic group as defined hereinafter.

The rheological additive of the present invention is provided by polymerizing at least three different monomer units. Other monomers which do not fall within these three groups may also be employed in various amounts provided they do not adversely affect the novel characteristics and efficiency of the resultant polymer thickener. Specifically the monomers from which the inventive polymer are prepared comprise the following:
a) 15-80 weight percent of one or more C₃- C₈ a, α,β-ethylenically unsaturated carboxylic acid monomers such as acrylic or methacrylic acid;
b) at least 15 weight percent of one or more copolymerizable vinyl-nonionic C₂-C₁₂ α, β-ethylenically unsatured monomers such as ethyl acrylate, vinyl acetate or methyl methacrylate; and
c) 0.5 to 25 weight percent of a non-ionic poly (alkyleneoxy) vinyl monomer as defined hereinafter terminated with an aralkyl substituted phenol hydrophobic group as defined hereinafter, hereinafter referred to as a hydrophobic phenol monomer.

### Description of the Preferred Embodiments

The rheological additives of the instant invention are alkali-swellable copolymers made, using presently available reactants, by standard chemical reaction processes, and can be made with available chemical apparatus possessed by most chemical or polymer chemical manufacturers.

The novel polymers, sometimes referred to as copolymers, of this invention require three reactive starting essential components: (a) 15-80 weight percent of a C₃-C₈ α,β-ethylenically unsaturated carboxylic acid monomer, (b) at least 15 weight percent of a copolymerizable nonionic vinyl monomer and (c) 0.5-25 weight percent of a hydrophobic phenol monomer as defined hereinafter. It has been discovered that the effectiveness of these polymers as rheological additives or thickeners for aqueous systems is critically dependent on these components. Carboxylic acid component (a) provides the requisite pH responsiveness and compatibility; the nonionic vinyl monomer (b) provides a long chain polymeric backbone and hydrophilic balance; and the hydrophobic phenol monomer (c) provides a unique hydrophobic moiety with specific atomic geometry to control the rheology of the aqueous latex system containing the solubilized polymeric thickener. Within the stated limits, the proportions of the individual monomers can be varied to achieve optimum properties for specific applications. Additional monomers, such as for example polyethylenically unsaturated monomers, commonly known as cross linking agents, can also be added to the reaction as can macromonomers of the type described in a series of Union Carbide patents of which U.S. Patent No. 5,342,883 and patents cited therein are representative.

### a) Carboxylic Acid Monomer:

The inventive polymer requires 15-80 weight percent of one or more C₃-C₈ α,β-ethylenically unsaturated carboxylic acid monomer. Monomers include those with the formula: 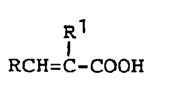 where (a) R is CH₃ and R¹ is H; (b) R is H and R¹ is H, C₁-C₄ alkyl or CH₂COOX; or (c) R is COOX and R¹ is H or CH₂COOX; and X is H or C₁-C₄ alkyl in (b) and (c).

Acrylic or methacrylic acid or mixtures thereof are most preferred, but fumaric, itaconic, mesaconic, crotonic and ethacrylic acids and other polycarboxylic acids such as maleic acid are also suitable, particularly if used in combination with acrylic or methacrylic acids. It is preferable to have at least 15 weight percent, and most preferably from 20-55 weight percent of the carboxylic acid monomer or monomers.

### b) Nonionic Vinyl Monomer:

In order to give the final co-polymer the polymeric backbone needed for effective thickening in most uses, it is required that at least 15 weight percent of at least one copolymerizable nonionic vinyl C₂-C₁₂ α,β-ethylenically unsaturated monomer be utilized in the polymer reaction, which can be selected from the group consisting of the formula:

CH₂=CYZ

where
Y is H and Z is -COOR², -C₆H₄R³, CN, Cl, 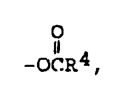 or -CH=CH₂;
Y and Z are Cl; or
Y is CH₃ and Z is -COOR², -C₆H₄R³, CN or -CH=CH₂; and
R² is C₁-C₂₄ alkyl or C₁-C₂₄ hydroxyalkyl;
R³ is H, Cl, Br, or C₁-C₈ alkyl; and
R⁴ is C₁-C₁₂ alkyl.

Typical examples of such monomers are the C₁-C₈ alkyl and C₂-C₈ hydroxyalkyl esters of acrylic and methacrylic acid, ethyl acrylate, ethyl methacrylate, methyl methacrylate, 2-ethylhexyl acrylate, butyl acrylate, butyl methacrylate, 2-hydroxyethyl acrylate, 2-hydroxybutyl methacrylate; the vinyl ester of a saturated aliphatic carboxylic acid such as vinyl acetate, vinyl propionate, vinyl butyrate, or vinyl caprolate; styrene, *t*-butylstyrene, isopropylstyrene and *p*-chlorostyrene; acrylonitrile, methacrylonitrile, butadiene, isoprene, vinyl chloride, vinylidene chloride, or the like, and mixtures thereof. A monomer such as vinyl acetate, or a mixture thereof with ethyl acrylate and/or methyl methacrylate is preferred. The monomers selected must be copolymerizable with the carboxylic acid monomer. It is present in an amount of at least 15% by weight, and most preferably in an amount of 20 to 70% by weight to make the inventive product.

### c) Non-ionic Polyalkoxylated Hydrophobic Surfactant Monomer:

The third monomer component used in an amount of 0.5-25 weight percent is a nonionic polyalkoxylated hydrophobic surfactant monomer, namely acrylate and methacrylate esters selected from the group consisting of:
1) poly(ethyleneoxy)ethyl acrylates of the formula: 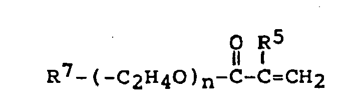 where R⁵ is H or CH₃, R⁷ is a compound defined below and n is 6-50; and
2) poly(alkyleneoxy)ethyl acrylates of the formula: 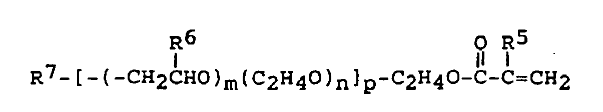 where R⁵ is H or CH₃, R⁶ is C₁-C₄ alkyl, R⁷ is a compound defined below, n is 6-50 and m is 1-40 and p = 1 to 10; wherein
the R⁷ compound is of the formula: 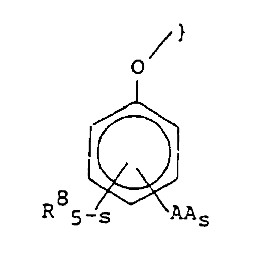 wherein:
R⁸ is a radical bonded to the aromatic ring selected from the group consisting of hydrogen, alkyl, aryl, aralkyl, OR⁶, halo, cyano, COOH, COOR⁹, COONH₂ and OCOR⁹, and where R⁹ is selected from the group consisting of alkyl groups, saturated or unsaturated, having 1 to 22 carbon atoms, aryl and aralkyl,
AA represents an aralkyl group of the type [(-CR¹⁰R¹¹)ₓ0̸] and s is an integer from 1 to 3,
R¹⁰ and R¹¹ for each methine carbon of the aralkyl groups are independently selected from the group consisting of H, C₁-C₁₂ linear or branched alkyl, aralkyl and aryl moieties,
x is an integer from 1 to 12, and
0̸ represents an aryl moiety.

Most preferred is where s is 3; R¹⁰ and R¹¹ are each H; x is 2; and 0̸ is phenyl (C₆H₅-).

Particularly effective is a vinyl arylphenol hydrophobic monomer manufactured by Rhone-Poulenc Corporation under the name Sipomer SEM-25®, formerly designated DV-4343, the latter nomenclature being used hereinafter. This monomer contains a R⁷ compound of the formula:

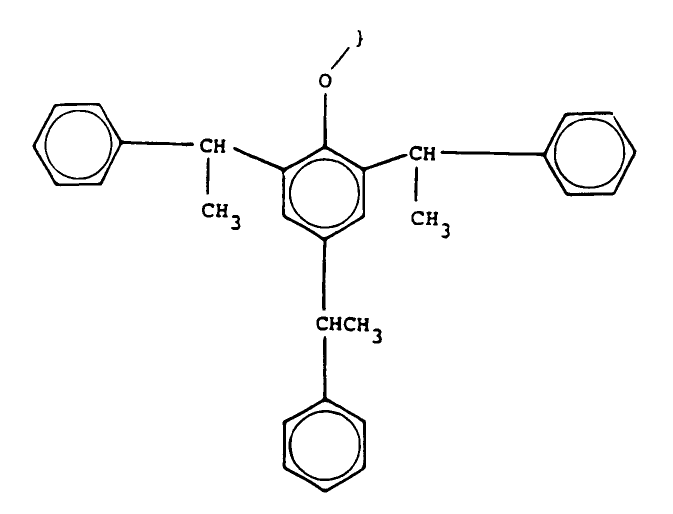

It has been found that the defined monomer is an important factor in the performance of the resulting polymeric thickener. This particular monomer is believed to be copolymerized into the polymer backbone such that yet the hydrophic group is pendant to the backbone and separated from it by a large number of ethylene oxide units. This configuration coupled with the unique hydrophobe allows the resulting polymer in which the hydrophobe is incorporated to thicken not only by an alkali-swellable mechanism but also by an associative mechanism. In an associative thickening mechanism, it is generally hypothesised that the hydrophobic moieties of the defined monomer are absorbed onto the latex particles contained in the system forming a network-like structure. Under the application of shear, the bridged latex particles are mechanically separated causing the desorption of the hydrophobic moieties and a decrease in viscosity known as "shear thinning". Upon the removal of shear force, the recovery is diffusion-controlled resulting in a viscosity increase at a relatively controlled rate resulting in good flow and leveling properties. With the addition of this mechanism to the already effective alkali-swellable mechanism, the polymeric thickeners of the instant invention display increased efficiency in a latex paint system coupled with improved flow and leveling properties.

Normally 0.5-25 weight percent of the hydrophobic phenol monomer based on total monomer units is utilized, preferably 0.5-10.0 percent, and most preferably 1.5 to 5.0 percent. Mixtures of such monomers may be used.

A preferred composition of the invention comprises (a) 15 to 45% by weight of methacrylic acid; (b) at least 15 % by weight of alkyl acrylate, methyl methacrylate or a mixture thereof; and (c) 0.5 to 10% by weight, preferably 1.5 to 5.0% by weight, of the hydrophobic phenol monomer comprising a poly(ehtyleneoxy)ethyl acrylate.

The monomers described above should be reacted as completely as possible during polymerization. It will be understood that since it is possible to obtain a monomer conversion of up to 99%, the resulting polymer will be a random copolymer wherein the monomers employed are incorporated into the copolymer at a weight ratio which is substantially the same as the initial monomer weight ratio employed.

The inventive polymers may be prepared by polymerising the monomers by any conventional method known in the art such as by solution, suspension, or emulsion polymerization on a batch, continuous or semi-continuous basis. Emulsion polymerisation is by far the preferred system since this route leads to an emulsion of the polymer in water which then can be used directly in thickening aqueous compositions, particularly latex paint.

Typical aqueous emulsion techniques employ an appropriate emulsifying agent for emulsifying the monomers and for maintaining the thickening polymer obtained in an emulsified condition which is then easy to use.

As an example of a preferred embodiment, emulsion polymerization of the inventive polymer is conducted in the following manner. A reactor is charged with deionized water and heated. When the temperature of the water in the reactor reaches about 40° - 50°C., a suitable emulsion polymerization initiator is added. When the temperature reaches about 70°C., about 10% of the total amount of emulsifier to be employed during polymerization is added.

Typically, the polymeric solids content of the final reaction mixture should not exceed about 50%, and can conveniently be from about 25 to about 35%, based on the weight of the resulting polymeric emulsion. The particular solids content obtained will normally depend on the thickener use and the aqueous system into which the polymer will be incorporated. Most preferably, when the polymeric emulsion resulting from emulsion polymerization is to be added directly to a latex paint formulation, the polymer is present therein in an amount of about 25 to about 50% (e.g., about 30%) by weight, based on the total weight of the emulsion.

The emulsion polymerization initiator used may be one of the free radical yielding initiators such as the inorganic persulfates, percarbonates, perborates, and the like or organic peroxides such as benzoyl peroxide or di-t-butyl peroxide, which are usually employed in free-radical-type polymerization systems. Preferably, ammonium persulfate is employed as the initiator. Mixtures of initiators may aiso be used. The amount of initiator used is normally in the range of from about 0.01 to about 5.0 parts by weight per 100 parts by weight of the total monomeric material reacted.

Any suitable emulsifier known by those skilled in the art may be employed to prepare the polymer, including the anionic, cationic and non-ionic types. Such emulsifiers can dictate the size and form of the resulting polymers. Exemplary anionic emulsifiers which may be employed include alkali metal and ammonium salts of the sulfates of alcohols having from 8 to 18 carbon atoms such as sodium lauryl sulfate. Mixtures of the emulsifiers may also be employed. Although any effective amount of emulsifier sufficient to emulsify the monomers and the resulting polymer may be used, it is preferred that such effective amount constitutes from about 0.1 to about 20 parts by weight, per 100 parts by weight of the total monomers to be reacted. As stated above, only about 10% of the total amount of emulsifier to be employed is initially charged to the polymerization reactor. The remaining amount is added with the monomer charge, as discussed below.

The reactor having the water, initiator, and emulsifier present therein is typically equipped with any conventional means for agitation. Other ingredients, such as chelating agents, buffering agents, pH adjusting agents, and neutralization chemicals, may also be added.

A holding tank above the charged polymerization reactor contains the remaining about 50% by weight of the total amount of water to be employed. The monomers to be polymenzed are then added to the holding tank, and pre-emulsified (with mixing), under ambient temperature conditions, by adding the remaining 90% of the total emulsifier thereto. When the pre-emulsion technique is not used. the monomers. after being mixed, are added directly to the polymerization reactor containing all of the water, initiator, emulsifier, and other chemicals to be used. The pre-emulsion is then added to the polymerization reactor over a certain amount of time. The method of addition of the pre-emulsion to the polymerization reactor follows conventional exothermic emulsion polymerization procedures.

Typically, the rate of monomer addition is selected so that it is equal to or slower than the polymerization reaction rate at the temperature employed. This insures that by the end of monomer addition substantially all of the monomer has reacted. At the completion of monomer addition the reaction temperature is normally raised about 10°C to about 20°C for a period of about 30 to 60 minutes or more, to insure completion of the reaction.

If desired, conventional chain transfer agents may be used in the polymerization reaction to minimize or prevent undue polymeric chain growth, or to control cross-linking and resultant molecular weight increases. The chain transfer agents are typically first dissolved in the monomers before the monomers are added to the polymerization reactor or emulsified, in the case of the pre-emulsion technique. Suitable chain transfer agents include long chain alkyl mercaptans and carbon tetrachloride. Normally, these agents are used in an amount of from about 0.05 to about 5 parts by weight of chain transfer agent, per 100 parts by weight of the total monomers to be reacted.

The polymeric product of the present invention, whether used as an aqueous polymer emulsion, solid or solution, will thicken aqueous compositions, particularly aqueous coating compositions, and more particularly latex paint compositions upon dissolution of the polymer by neutralization into the aqueous composition to be thickened.

The amount of the polymer thickener that may be dissolved in any given aqueous composition may fall within a wide range depending on the particular system and the viscosity desired. Although any effective amount of the polymer thickener may be employed for dissolution, typically from 0.05 to 20%, preferably from about 0.1 to about 3% by weight, based on the weight of the final aqueous composition including polymer is used.

For latex paint compositions, the polymer may be dissolved therein in an amount of from about 0.05 to about 5%, and preferably from about 0.1 to about 3% by weight, based on the weight of the total latex paint composition including polymer. The mixing of the novel polymeric thickener into a latex paint is particularly easy as the polymer is readily dispersible. In the normal situation, the appropriate amount is mixed into the latex using paint milling apparatus.

The polymers of the present invention can be employed as thickeners for controlling viscosity and rheology of any aqueous-based composition. An aqueous-based composition is herein defined to be a composition wherein water comprises from 5% to nearly 100% by weight of the total composition. The inventive polymers may be used to impart rheological properties to water by itself (100% water) and water solutions such as those used in metal working fluids. Aqueous dispersions, emulsions, suspensions, solutions, slurries and the like, may be thickened by the subject polymers.

The viscosities and rheological profile of the aqueous compositions obtainable with the novel polymeric thickeners of this invention depend on the amount of polymer dissolved in the aqueous composition. Thus, the viscosity of a polymer present in water in an amount of about 1 to about 5% by weight, based on the weight of the water and polymer, can achieve viscosities of from about 1000 to about 35.000 centipoise (cP) as determined from a Brookfield Model RVT viscometer at 20 rpm. Higher and lower viscosities can be obtained. Typical aqueous compositions include compositions to be applied to textiles such as latex inks and adhesives, printing inks including high quality inks used in artistic prints. latex sealants and caulks, and flat and high gloss paints.

The polymeric thickeners may also be used when thickening is desired in the purification of water, used in the recovery of oil from exhausted oil wells by water flooding techniques. Other aqueous compositions to which the polymers can be added for thickening purposes include drilling muds, cosmetics, paper coatings, varnishes, stains, fumiture finishes, latex paints, foundry core washes, and the like. Aqueous compositions include additional compositions to be applied to textiles such as warp sizing liquids and fluid backings for rugs and similar pile fabrics.

Preferably, the polymers of this invention are used to provide viscosity control to latex paint compositions. Examples of latex paint compositions include those based on resins or binders of acrylonitrile, homopolymers of styrene, copolymers of acrylonitrile, homopolymers and copolymers of vinyl halide resins such as vinyl chloride, or vinyl esters such as vinyl acetate, vinyl acetate homopolymers and copolymers, homopolymers and copolymers of acrylic and methacrylic acid and their esters and derivatives, polybutadiene, polyisophorene, butyl rubber, ethylene-propylene copolymers, olefinic resins like polyethylene and polypropylene, polyvinyl alcohol, epoxies, epoxy esters carboxylated natural and synthetic lattices and similar resin-polymer latex systems.

Such latex paints and coatings are well known in the art, and typically comprise an emulsion and a dispersion or suspension of discrete disperable particles of resin binder and pigment, including titanium dioxide, and other chemicals in water. Further optional ingredients often include clay, barium sulfate, surfactants, coalescing agents, talc, and the like. Preferably, the polymer is used in acrylic based latex paints (i.e., where the binder is an acrylic polymer).

The more usual method of application of the polymers of the present invention for latex paint thickening is to add the polymer in emulsion to the medium to be thickened and, after mixing, to introduce an alkaline material to neutralize the acid. The major portion of the thickening effect is obtained in a few moments following neutralization. In the presence of high concentrations of electrolytes, the viscosity development may take longer. This method of applying a copolymeric emulsion to an aqueous system before neutralization enables one to handle a high solids thickener in a non-viscous state, to obtain a uniform blend, and then to convert to a highly viscous condition by the simple addition of a base material to bring the pH of the system to pH=7 or above.

The aqueous solutions thickened with the neutralized latex copolymers of this invention exhibit good viscosity stability even at a pH as high as 12.

The polymers may be utilized in a variety of other ways to provide the thickened latex compositions of the invention. When neutralized, these polymers swell in an aqueous system acting as a highly efficient thickener. For example, the polymer, whether in aqueous dispersion or while in a dry form, may be blended into an aqueous system to be thickened, followed by addition of a neutralizing agent. Alternatively, the polymer may first be neutralized in an aqueous dispersion form, and then blended with the aqueous system.

The polymer thickeners may optionally be provided in a dry state in a number of ways. For example, the unneutralized copolymer may be spray dried. It is also possible to spray dry or otherwise dehydrate the neutralized polymer thickener, and then reconstitute the aqueous thickener dispersion at a future time and place by agitation in the aqueous medium, provided the pH of the dispersion is maintained at a proper level.

The polymeric compositions described above are easily made, and easily dispersed, rheological additives, equal to or better than comparable higher-cost and more difficult to handle cellulosics, with a wide spectrum of uses.

The present invention is further illustrated by the following examples. All parts and percentages in the examples as well as in the specification and claims are by weight unless otherwise specified. The invention is the composition of the polymer and not how it is made.

### Example 1

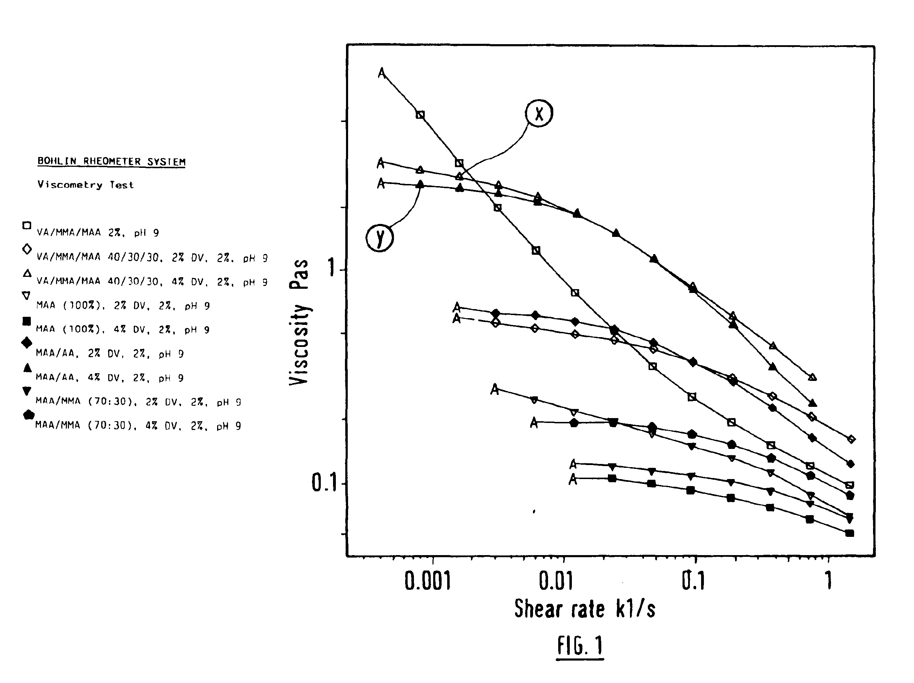

A number of polymers were made by laboratory polymerization using a variety of conventional monomers with some samples, in addition, having as a reaction product 2 or 4 parts by weight of DV-4343, a hydrophobic phenol monomer obtained from Rhone-Poulenc. The polymers were used as rheological additives in water at pH=9. The thickened aqueous system was then subjected to a standard shear test and the results are plotted on Figure 1.

Polymers made with vinyl acetate and acrylic acid at a loading of 4 parts DV4343, designated X and Y, on Figure 1 exhibited a shear thinning behavior similar to an aqueous system thickened with a cellulosic rheological additive.

The following abbreviations are used in Figure 1:

| | |
|---|---|
| VA | Vinyl acetate |
| MMA | Methyl methacrylate |
| MAA | Methacrylic acid |
| AA | Acrylic acid |
| DV | Rhone-Poulenc DV-4343 |

### Example 2

A number of additional polymers were prepared using emulsion polymerization with conventional monomers used at Rheox, Inc., with the addition of certain amounts of DV-4343 - the raw materials used and the polymerization procedure are described below. The polymer samples obtained were used as rheological additives in a standard latex paint, designated T-23773, and a series of tests, the results of which are summarized in Tables I to II, were conducted using commonly accepted standards and techniques for gauging the effectiveness of latex rheological additives. The paint formula for paint number T-23773 is described hereafter. Rheolate 1, a commercially available additive of Rheox, Inc., was used as a control. As described below, the samples made using the invention herein were superior in performance.

### Raw Materials

A. Pre-Emulsion
   80.0g = Deionized water
   7.0g = ABEX EP-110 Surfactant (32.15% Active, Rhone-Poulenc)
   40.0g = Vinyl acetate
   30.0g = Methyl methacrylate
   30.0g = Methacrylic acid
   4.69g = DV-4343 (64% Active, Polyethoxylated tri-styryl phenol methacrylate, Rhone-Poulenc)
B. Reactor solution
   150.0g = Deionized water
   5.0g = ABEX EP-110 Surfactant
C. Initiator
   0.24g = Ammonium persulfate dissolved in 5.0g deionized water

### Procedure:

A. Monomer Pre-Emulsion
   80.0g of deionized water were weighed into a 250ml 4-neck flask and, while stirring, were sparged with dry Nitrogen gas for 30 min. 7.0g of the ABEX EP-110 were added and stirred for 15 min. A mixture of the four monomers was added and stirred for 15 min. to form a stable, milky-white emulsion.
B. Polymerization
   150.0g of deionized water were weighed into a 500ml reaction kettle, equipped with a stirring rod, condenser, and thermometer, and were sparged with dry Nitrogen gas for 30 min. 5.0g of the ABEX EP-110 were added and the reactor water was heated to 68-70°C and stirred at 300 rpm. After the water had reached temperature, 10% of the monomer pre-emulsion was added to the reactor followed by the initiator solution and allowed to react for 15 min. While the temperature was held at 70°C, the remainimg monomer pre-emulsion was added to the reaction kettle over the next two hours. At the end of the monomer feed, the reactor temperature was raised to 80°C for 30 min. followed by increasing the temperature to 85°C for 30 min. to insure that all of the monomer has reacted. The batch was then cooled to room temperature and filtered through a 40 mesh screen.
After synthesis, samples containing various amounts of the DV-4343 monomer were evaluated, along with commercially-available controls, as rheological additives for water-based paint systems. The paint formula for paint number T-23773, an acrylic latex paint formula, is given below:

| Material | Pounds | Gallons |
|---|---|---|
| Water | 94.2 | 11.30 |
| Tamol 731 (25% Active, dispersant, Rohm and Haas) | 12.6 | 1.37 |
| Triton CF-10 (wetting agent, Union Carbide, Inc.) | 2.5 | 0.28 |
| Nopco NXZ (defoamer, Henkel, Corp.) | 1.0 | 0.13 |
| Ethylene glycol | 25.0 | 2.69 |
| Kronos 2160 (pigment, Kronos, Inc.) | 250.0 | 7.60 |
| Nytal 300 (talc, Vanderbilt, Inc.) | 205.8 | 8.98 |
| Rhoplex AC-235 (latex emulsion, Rohm and Haas) | 490.8 | 55.75 |
| Disperse the above at high speed for 15 min., then mix at medium speed to incorporate. | | |
| Nopco NXZ | 1.0 | 0.13 |
| Nuocept C (preservative, Huls, Inc.) | 9.0 | 1.11 |
| Ammonium hydroxide | 2.0 | 0.27 |
| Thickener plus water * | 86.7 | 10.31 |
| Total | 1180.6 | 99.92 |

| | | |
|---|---|---|
| * Thickener dry weight: 4.1 lbs/100 gal. | | |

The Stormer and ICI viscosities for samples containing various amounts of DV-4343 dispersed in the above paint formula are presented in Tables I and II. These results document that the incorporation of between 2 - 6% by weight of DV-4343 into several alkali-swellable-type polymers leads to increased Stormer and ICI viscosity efficiency when compared to currently marketed products on an equal weight basis.

**TABLE I**

| LIQUID EMULSION POLYMER IN ACRYLIC LATEX PAINT FORMULA T-23773 | | | | |
|---|---|---|---|---|
| | | Paint Properties | | |
| Comonomers (parts by weight)¹ | 2% Aqueous Viscosity² (cP) | Load kg/379 ℓ (lbs/100 gal) | Viscosity | |
| | | | Stormer³ (KU) | ICI⁴ (P) |
| 40 VA/30 MMA/30 MAA/2 DV4343 | 12,750 | 0.9 (2.0) | 78 | 0.4 |
| | | 1.8 (4.0) | 115 | 1.0 |
| | | | | |
| 40 VA/30 MMA/30 MAA/3 DV4343 | 16,500 | 0.9 (2.0) | 82 | 0.5 |
| | | 1.8 (4.0) | 127 | 1.1 |
| | | | | |
| 40 VA/30 MMA/30 MAA/4 DV4343 | 20,000 | 0.9 (2.0) | 90 | 0.6 |
| | | 1.8 (4.0) | >141 | 1.3 |
| | | | | |
| 40 VA/30 MMA/30 MAA/6 DV4343 | 28,500 | 0.9 (2.0) | 101 | 0.6 |
| | | 1.8 (4.0) | >141 | 1.5 |
| | | | | |
| 30 VA/30 MMA/40 MAA/2 DV4343 | 9,500 | 0.9 (2.0) | 72 | 0.4 |
| | | 1.8 (4.0) | 106 | 0.8 |
| | | | | |
| 30 VA/30 MMA/40 MAA/3 DV4343 | 12,000 | 0.9 (2.0) | 90 | 0.5 |
| | | 1.8 (4.0) | >141 | 1.4 |
| | | | | |
| 30 VA/30 MMA/40 MAA/4 DV4343 | 14,750 | 0.9 (2·0) | 104 | 0.6 |
| | | 1.8 (4.0) | >141 | 1.3 |
| | | | | |
| RHEOLATE® 1⁵ | 2,300 | 1,8 (4.0) | 90 | 0.5 |

| | | | | |
|---|---|---|---|---|
| ¹Comonomers based on parts by weight of monomers charged. VA = Vinyl acetate MMA = Methyl methacrylate MAA = Methacrylic acid | | | | |
| ² Measured on Brookfield RVT Viscometer, #4 spindle at 20 rpm, pH = 9,25°C. | | | | |
| ³ KU = Krebs Units, according to ASTH Method D562; upper limit is 141 KU. | | | | |
| ⁴ ICI Cone and Plate Viscometer at 10,000 sec⁻¹, P = Poise. | | | | |
| ⁵Available from RHEOX, Inc. | | | | |

**TABLE II**

| LIQUID EMULSION POLYMERS IN ACRYLIC LATEX PAINT FORMULA T-22773 | | | | |
|---|---|---|---|---|
| | | Paint Properties | | |
| Comonomers (parts by weight)¹ | 2% Aqueous Viscosity² (cP) | Load kg/379 ℓ (lbs/100 gal) | Viscosity | |
| | | | Stormer³ (KU) | ICI⁴ (P) |
| 20 VA/40 MMA/40 MAA/2 DV4343 | 7,000 | 0.9 (2.0) | 76 | 0.4 |
| | | 1.8 (4.0) | 112 | 1.0 |
| | | | | |
| 20 VA/40 MMA/40 MAA/3 DV4343 | 5,800 | 0.9 (2.0) | 81 | 0.8 |
| | | 1.8 (4.0) | 134 | 1.0 |
| | | | | |
| 20 VA/40 MMA/40 MAA/4 DV4343 | 7,400 | 0.9 (2.0) | 85 | 0.5 |
| | | 1.8 (4.0) | >137 | 1.2 |
| | | | | |
| 20 VA/40 MMA/40 MAA/5 DV4343 | 9,500 | 0.9 (2.0) | 104 | 0.6 |
| | | 1.8 (4.0) | >141 | 1.6 |
| | | | | |
| 47.5EA/47.5MAA/5DV4343 | 1,500 | 0.9 (2.0) | 101 | 0.7 |
| | | | | |
| 55EA/40MAA/5DV4343 | 1,900 | 0.9 (2.0) | 97 | 0.8 |
| | | | | |
| 40EA/55MAA/5DV4343 | 1,200 | 0.9 (2.0) | | |
| | | | | |
| RHEOLATE® 1 | 2,300 | 1.8 (4.0) | 90 | 0.5 |
| Acrysol® TT-935⁵ | | 1.1 (2.5) | 89 | 0.8 |
| Acrysol® TT-950⁵ | | 0.9 (2.0) | 83 | 0.6 |

| | | | | |
|---|---|---|---|---|
| ¹Comonomers based on parts by weight of monomers charged. VA = Vinyl acetate MMA = Methyl methacrylate MAA = Methacrylic acid EA = Ethyl acrylate | | | | |
| ² Measured on Brookfield RVT Viscometer, #4 spindle at 20 rpm, pH = 9,25°C. | | | | |
| ³ KU = Krebs Units, according to ASTH Method D562; upper limit is 141 KU. | | | | |
| ⁴ ICI Cone and Plate Viscometer at 10,000 sec⁻¹, P = Poise. | | | | |
| ⁵Available from Rohm and Haas Co. | | | | |

### Example 3

An alkali-swellable polymer using a surfactant modification of the prior art (Rohm & Haas TT-935) was compared for high shear viscosity and sag with a sample prepared using emulsion polymerization of vinyl acetate, methacrylic acid, methyl methacrylate and 3% DV-4343.

The two polymers were used as rheological additives in a standard tintable white interior flat latex paint formulation at loadings of approximately two to one. Results reported in Table III indicate superior high shear and sag performance for the sample made with DV-4343.

**TABLE III**

| COMPOSITION | | |
|---|---|---|
| | TT-935 | DV-4343 CONTAINING SAMPLE |
| KU/ICI | | |
| Initial | 105/0.7 | 110/1.4 |
| Overnight | 103/0.7 | 110/1.4 |
| | | |
| Leneta Sag | 9 | 18 |
| | | |
| Leveling | 8 | 4 |
| | | |
| pH | 8.20 | 8.68 |

## Claims

1. A composition of matter useful as a rheological additive for aqueous compositions comprising the reaction product of
(a) 15 to 80 percent by weight of one or more C₃-C₈ α,β-ethylenically unsaturated carboxylic acid monomers;
(b) at least 15 percent by weight of one or more copolymerizable non-ionic vinyl C₂-C₁₂ α,β-ethylenically unsaturated monomers; and
(c) 0.5 to 25 percent by weight of one or more hydrophobic surfactant monomers selected among non-ionic polyalkoxylated vinyl monomers selected from the group consisting of:
1) poly(ethyleneoxy)ethyl acrylates of the formula: 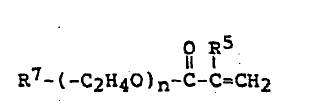 where R⁵ is H or CH₃, R⁷ is a compound defined below and n is 6-50; and
2) poly(alkyleneoxy)ethyl acrylates of the formula: 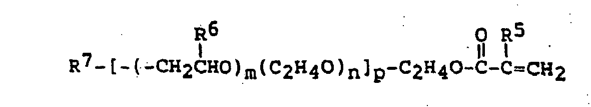 where R⁵ is H or CH₃, R⁶ is C₁-C₄ a(ky), R⁷ ; a compound defined below, n is 6-50 and m is 1-40 and p = 1 to 10; wherein
the R⁷ compound is of the formula: 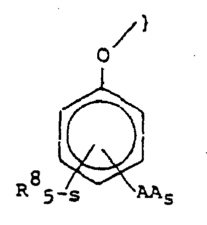
wherein:
R⁸ is a radical bonded to the aromatic ring selected from the group consisting of hydrogen, alkyl, aryl, aralkyl, OR⁶, halo, cyan, COOH, COOR⁹, COONH₂ and OCOR⁹, and where R⁹ is selected from the group consisting of alkyl groups, saturated or unsaturated, having 1 to 22 carbon atoms, aryl and aralkyl,
AA represents an aralkyl group of the type [(-CR¹⁰R¹¹)ₓØ] and s is an integer from 1 to 3,
R¹⁰ and R¹¹ for each methine carbon of the aralkyl groups are independently selected from the group consisting of H, C₁-C₁₂ linear or branched alkyl, aralkyl and aryl moieties,
x is an integer from 1 to 12, and
ø represents an aryl moiety.

2. The composition of claim 1 wherein a) is 20 to 55 percent by weight, b) is 20 to 70 percent by weight and c) is 0.5 to 10.0 percent by weight, preferably 1.5 to 5.0 percent by weight.

3. The composition of claim 1 wherein a) is methacrylic acid, b) is a mixture of vinyl acetate and methyl methacrylate and c) is Rhone-Poulenc DV-4343.

4. The composition of claim 1 wherein a) is methacrylic acid, b) is selected from the group consisting of alkyl acrylate, methyl methacrylate, and mixtures thereof and c) comprises a poly(ethyleneoxy) ethyl acrylate.

5. The composition of claim 4, wherein a) is 15 to 45% by weight, b) is at least 15% by weight; and c) is 0.5 to 10% by weight, preferably 1.5 to 5.0% by weight.

6. The composition of any preceding claim containing as an additional reactant a macromonomer.

7. A process for preparing a composition according to any one of claims 1 to 6 comprising polymerizing the monomers (a), (b) and (c), and optionally, a macromonomer.

8. The process of claim 7 wherein emulsion polymerisation is used to react the monomers.

9. A thickened aqueous composition comprising a latex system containing latex, dispersible material and an effective rheological amount of the composition of any one of claims 1 to 6.

10. A process of making a thickened aqueous composition which comprises:
1) blending with an aqueous composition a polymer composition according to any one of claims 1 to 6, and
2) adjusting the pH of said blend within a range of 7 to 12 as necessary to solubilize the polymer composition therein and, by doing so, to thicken the aqueous composition.

11. The process of claim 10 wherein the thickened aqueous composition is a latex paint.

## Patentansprüche

1. Zusammensetzung von Material, die als ein rheologisches Additiv für wässrige Zusammensetzungen nützlich ist, die das Reaktionsprodukt umfasst von
(a) 15 bis 80 Gew.-% von einem oder mehreren α,β-ethylenisch ungesättigten C₃-C₈-Carbonsäuremonomeren;
(b) mindestens 15 Gew.-% von einem oder mehreren copolymerisierbaren nichtionischen α,β-ethylenisch ungesättigten Vinyl-C₂-C₁₂-Monomeren und
(c) 0,5 bis 25 Gew.-% von einem oder mehreren hydrophoben Surfactant-Monomeren, die ausgewählt werden unter nichtionischen polyalkoxylierten Vinylmonomeren, ausgewählt aus der Gruppe, bestehend aus:
1) Poly(ethylenoxy)ethylacrylate der Formel: 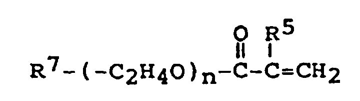 worin R⁵ H oder CH₃ darstellt, R⁷ eine nachstehend definierte Verbindung darstellt, n 6-50 ist; und
2) Poly(alkylenoxy)ethylacrylate der Formel: 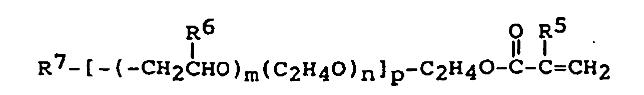 worin R⁵ H oder CH₃ darstellt, R⁶ C₁-C₄-Alkyl darstellt, R⁷ eine nachstehend definierte Verbindung darstellt, n 6-50 ist und m 1-40 ist und
p = 1 bis 10; worin
die R⁷-Verbindung die Formel: 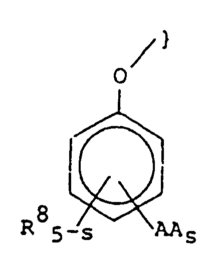 aufweist,
worin:
R⁸ einen Rest, gebunden an den aromatischen Ring, ausgewählt aus der Gruppe, die aus Wasserstoff, Alkyl, Aryl, Aralkyl, OR⁶, Halogen, Cyano, COOH, COOR⁹, COONH₂ und OCOR⁹ besteht, darstellt, und worin R⁹ aus der Gruppe, bestehend aus Alkylgruppen, gesättigt oder ungesättigt, mit 1 bis 22 Kohlenstoffatomen, Aryl und Aralkyl, ausgewählt wird;
AA eine Aralkylgruppe von dem Typ [(-CR¹⁰R¹¹)ₓ Ø] wiedergibt und s eine ganze Zahl von 1 bis 3 ist,
R¹⁰ und R¹¹ für jeden Methin-Kohlenstoff von den Aralkylgruppen unabhängig aus der Gruppe, die aus H, linearen oder verzweigten C₁-C₁₂-Alkyl, Aralkyl und Aryl-Einheiten besteht, ausgewählt werden;
x eine ganze Zahl von 1 bis 12 ist, und
ø eine Aryl-Einheit wiedergibt.

2. Zusammensetzung nach Anspruch 1, worin a) 20 bis 55 Gew.-% ist, b) 20 bis 70 Gew.-% ist und c) 0,5 bis 10,0 Gew.-%, bevorzugt 1,5 bis 5,0 Gew.-%, ist.

3. Zusammensetzung nach Anspruch 1, worin a) Methacrylsäure ist, b) ein Gemisch aus Vinylacetat und Methylmethacrylat ist und c) Rhone-Poulenc DV-4343 ist.

4. Zusammensetzung nach Anspruch 1, worin a) Methacrylsäure ist, b) aus der Gruppe ausgewählt wird, die aus Alkylacrylat, Methylmethacrylat und Gemischen davon besteht und c) ein Poly(ethylenoxy)ethylacrylat umfasst.

5. Zusammensetzung nach Anspruch 4, worin a) 15 bis 45 Gew.-% ist, b) mindestens 15 Gew.-% ist und c) 0,5 bis 10 Gew.-%, bevorzugt 1,5 bis 5,0 Gew.-%, ist.

6. Zusammensetzung nach einem vorangehenden Anspruch, die als einen zusätzlichen Reaktionsteilnehmer ein Makromonomer enthält.

7. Verfahren zum Herstellen einer Zusammensetzung nach einem der Ansprüche 1 bis 6, das die Polymerisation der Monomere (a), (b) und (c) und wahlweise ein Makromonomer umfasst.

8. Verfahren nach Anspruch 7, worin zum Reagieren der Monomere Emulsionspolymerisation verwendet wird.

9. Verdickte wässrige Zusammensetzung, die ein Latexsystem umfasst, das Latex, dispergierbares Material und eine wirksame rheologische Menge von der Zusammensetzung nach einem der Ansprüche 1 bis 6 umfasst.

10. Verfahren zum Herstellen einer verdickten wässrigen Zusammensetzung, das umfasst:
1) Vermischen einer Polymer-Zusammensetzung nach einem der Ansprüche 1 bis 6 mit einer wässrigen Zusammensetzung und
2) Einstellen des pH von genannter Mischung nach Bedarf in einem Bereich von 7 bis 12, um die Polymer-Zusammensetzung darin löslich zu machen und dadurch die wässrige Zusammensetzung zu verdicken.

11. Verfahren nach Anspruch 10, worin die verdickte wässrige Zusammensetzung eine Latexfarbe ist.

## Revendications

1. Composition de matière utile comme additif rhéologique pour compositions aqueuses comprenant le produit de la réaction de
(a) 15 à 80 % en poids d'un ou plusieurs monomères d'acide carboxylique à insaturation α,β-éthylénique en C₃ à C₈ ;
(b) au moins 15 % en poids d'un ou plusieurs monomères vinyliques à insaturation α,β-éthylénique en C₂ à C₁₂ non ioniques copolymérisables ; et
(c) 0,5 à 25 % en poids d'un ou plusieurs monomères tensioactifs hydrophobes choisis parmi les monomères vinyliques polyalcoxylés non ioniques sélectionnés dans le groupe constitué par :
1) les acrylates de polyéthylèneoxy)éthyle de formule : 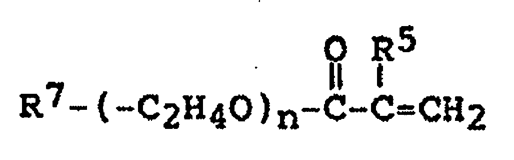 dans laquelle R⁵ représente H ou CH₃, R⁷ est un composé défini ci-après et n est compris entre 6 et 50 ; et
2) les acrylates de poly(alkylèneoxy)éthyle de formule : 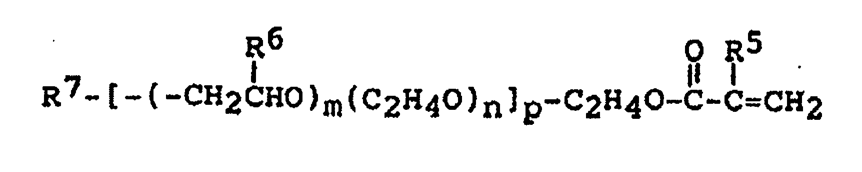 dans laquelle R⁵ représente H ou CH₃, R⁶ est un alkyle en C₁ à C₄, R⁷ est un composé défini ci-après, n est compris entre 6 et 50, m est compris entre 1 et 40, et p est compris entre 1 et 10 ; où le composé R⁷ répond à la formule suivante : 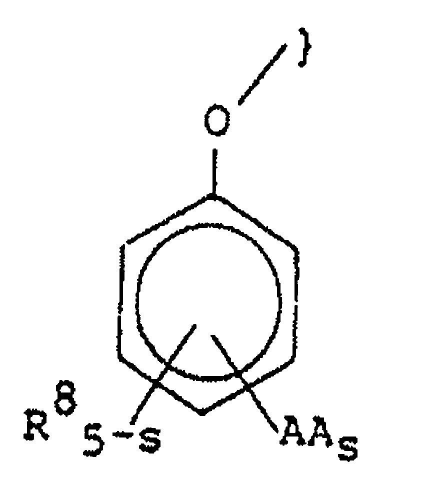 dans laquelle :
R⁸ est un radical lié au cycle aromatique sélectionné dans le groupe constitué par l'hydrogène, les groupes alkyle, aryle, aralkyle, OR⁶, halo, cyano, COOH, COOR⁹, COONH₂ et OCOR⁹, et dans laquelle R⁹ est sélectionné dans le groupe constitué par des groupes alkyle, des groupes aryle et aralkyle saturés ou insaturés ayant 1 à 22 atomes de carbone ;
AA représente un groupe aralkyle du type [(CR¹⁰R¹¹)xØ] et s est un entier entre 1 et 3 ;
R¹⁰ et R¹¹, pour chaque atome de carbone de méthine des groupes aralkyle, sont indépendamment choisis dans le groupe constitué par l'hydrogène et des groupements aryle, aralkyle et alkyle en C₁ à C₁₂ linéaires ou ramifiés ;
x est un entier entre 1 et 12, et
Ø représente un groupement aryle.

2. Composition selon la revendication 1, dans laquelle a) représente 20 à 55 % en poids, b) représente 20 à 70 % en poids et c) représente 0,5 à 10,0 % en poids, de préférence 1,5 à 5,0 % en poids.

3. Composition selon la revendication 1, dans laquelle a) représente l'acide méthacrylique, b) représente un mélange d'acétate de vinyle et de méthacrylate de méthyle, et c) est le DV-4343 de la société Rhône-Poulenc .

4. Composition selon la revendication 1, dans laquelle a) représente l'acide méthacrylique, b) est choisi dans le groupe constitué par un acrylate d'alkyle, le méthacrylate de méthyle et des mélanges de ceux-ci, et c) comprend un acrylate de polyéthylèneoxy)éthyle.

5. Composition selon la revendication 4, dans laquelle a) représente 15 à 45 % en poids, b) représente au moins 15 % en poids ; et c) représente 0,5 à 10 % en poids, de préférence 1,5 à 5,0 % en poids.

6. Composition selon l'une quelconque des revendications précédentes, contenant comme réactif supplémentaire un macromonomère.

7. Procédé de préparation d'une composition selon l'une quelconque des revendications 1 à 6, comprenant la polymérisation des monomères (a), (b) et (c), et, éventuellement, d'un macromonomère.

8. Procédé selon la revendication 7, dans lequel la polymérisation en émulsion est utilisée pour faire réagir les monomères.

9. Composition aqueuse épaissie comprenant un système latex contenant du latex, un matériau dispersible et une quantité rhéologique efficace de la composition selon l'une quelconque des revendications 1 à 6.

10. Procédé de fabrication d'une composition aqueuse épaissie, comprenant les étapes consistant à :
1) mélanger à une composition aqueuse une composition polymère selon l'une quelconque des revendications 1 à 6, et
2) ajuster le pH dudit mélange dans une plage de 7 à 12 selon ce qui est nécessaire pour solubiliser la composition polymère dans celui-ci et, ce faisant, épaissir la composition aqueuse.

11. Procédé selon la revendication 10, dans lequel la composition aqueuse épaissie est une peinture au latex.
